(19)

Europäisches
Patentamt
European
Patent Office
Office européen
des brevets

(11) **EP 4 430 298 B1**

(12) **EUROPEAN PATENT SPECIFICATION**

(45) Date of publication and mention
of the grant of the patent:
**15.10.2025 Bulletin 2025/42**

(21) Application number: **22818779.5**

(22) Date of filing: **21.11.2022**

(51) International Patent Classification (IPC):
***F03D 7/02*** *(2006.01)*

(52) Cooperative Patent Classification (CPC):
**F03D 7/0204;** F05B 2270/321; F05B 2270/802;
Y02E 10/72

(86) International application number:
**PCT/EP2022/082591**

(87) International publication number:
**WO 2023/117239 (29.06.2023 Gazette 2023/26)**

(54) **METHOD AND DEVICE OF CALIBRATING A YAW SYSTEM OF A WIND TURBINE**

VERFAHREN UND VORRICHTUNG ZUR KALIBRIERUNG EINES GIERSYSTEMS EINER
WINDTURBINE

PROCÉDÉ ET DISPOSITIF D'ÉTALONNAGE D'UN SYSTÈME DE LACET D'UNE ÉOLIENNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.12.2021 EP 21217294**

(43) Date of publication of application:
**18.09.2024 Bulletin 2024/38**

(73) Proprietor: **Siemens Gamesa Renewable Energy
A/S
7330 Brande (DK)**

(72) Inventors:
• **ESBENSEN, Thomas
7400 Herning (DK)**
• **GUSTAVSEN, Jonas Weiss
7330 Brande (DK)**
• **JOSSO, Maxence
69008 Lyon (FR)**

(74) Representative: **SGRE-Association
Siemens Energy Global GmbH & Co. KG
SE I IM P Intellectual Property
Siemenspromenade 9
91058 Erlangen (DE)**

(56) References cited:
**WO-A1-2018/001433      WO-A1-2018/059641**

## Description

Field of invention

The present invention relates to a method and a device of calibrating a yaw system of a wind turbine.

It is important for a wind turbine to face the wind in order to maximize power production and minimize loads. The turbines are yawed based on a wind direction measurement, typically derived from a sensor atop a turbine nacelle, wherein the wind sensor can output a continuous or discrete signal indicative of the wind direction. If the wind direction measurement is just slightly off, it may result in a yaw misalignment which can cause a significant production loss and increased loading.

To ensure optimal performance of wind turbines, the controller settings need to be optimal. The influence of controller settings has a high impact on power production, loads, and acoustic noise emissions. It may be possible to improve the annual energy production of up to 1 to 2% by proper optimization, reduce structural loads significantly, and reduce noise emission.

Typically, a model of the wind turbine and/or models of the components of the wind turbine are used to derive controller settings. However, due to model limitations or simplifications of the wind turbine and/or the conditions (wind, terrain, environment, etc.) and deviations of the final product (production tolerances, calibration tolerances, etc.), the controller settings may have to be optimized, retuned or adjusted) in the field to ensure optimal performance of the wind turbines.

EP 3 225 837 A1 discloses a method for calibrating a wind direction measurement for a wind turbine. The method comprising: measuring plural samples of a relative wind direction representing a difference angle between a real wind direction and an orientation of a measurement equipment, in particular a direction orthogonal to a rotor blade plane, to obtain plural measured relative wind directions; deriving a measured relative wind direction change based on the measured relative wind directions; measuring plural samples of a performance parameter indicating a performance of the wind turbine; deriving a performance change based on the plural samples of the performance parameter; determining a correlation value between the measured relative wind direction change and the performance change; measuring further plural samples of the relative wind direction; and correcting the further measured relative wind directions based on the correlation value, to obtain corrected further measured relative wind directions.

WO2018059641A1 discloses a method for controlling a wind turbine by adjusting a wind direction parameter as function of wind direction offsets. The method comprising obtaining an estimate for a wind power parameter as function of wind direction and determining a number of predefine wind direction intervals. Continuously, obtaining at time intervals data sets comprising the wind power parameter and wind direction as measured by wind sensor and generate data sets for every predefined interval and determine an average wind power parameter. Then, determine for each wind direction interval and for each data set group a wind direction offset by comparing the average wind power parameter with the estimated wind power parameter, and finally adjust the wind direction as function of the determined wind direction offsets.

Summary of the Invention

It is the object of the present invention to provide a method and a device of accurately calibrating a yaw system of a wind turbine, for example a wind direction sensor or a yaw actuator. This object may be achieved by the subject matters according to the independent claims. The present invention is further developed as set forth in the dependent claims.

According to a first aspect of the invention, a method of calibrating a yaw system of a wind turbine is provided. The wind turbine comprises a rotor having a plurality of rotor blades, each blade being configured to be pitched by a pitch angle about a pitch axis of the blade, the rotor being mounted to a nacelle to rotate about a rotation axis with a rotor speed to drive a generator for producing electrical energy, the nacelle being mounted to a tower to rotate about a yaw axis. The method comprises steps of: performing a yaw event at a yaw event time in a clockwise direction and a counter-clockwise direction, respectively; selecting a predetermined time span directly before each yaw event time in the clockwise direction and the counter-clockwise direction; recording data of a wind direction and a performance parameter in the predetermined time span before each yaw event time in the clockwise direction and the counter-clockwise direction, and averaging the data; determining a first experimental performance parameter at the beginning of the time span and a second experimental performance parameter at the end of the time span from the averaged data for each yaw event in the clockwise direction and the counter-clockwise direction; calculating an experimental performance parameter difference between the first and second experimental performance parameters for each yaw event in the clockwise direction and the counter-clockwise direction; determining a first wind direction at the beginning of the time span and a second wind direction at the end of the time span from the averaged data for each yaw event in the clockwise direction and the counter-clockwise direction; calculating a first theoretical performance parameter at the beginning of the time span based on the determined first wind direction and a second theoretical performance parameter at the end of the time span based on the determined second wind direction for each yaw event in the clockwise direction and the counter-clockwise direction; calculating a theoretical performance parameter difference between the first and second theoretical performance parameters for each yaw event in the clockwise direction and the counter-clockwise direction; calculating absolute errors between the experimental performance parameter difference and the theoretical performance parameter difference of the yaw events in the clockwise direction and the counter-clockwise direction, respectively; adding the absolute errors of the yaw events in the clockwise direction and the counter-clockwise direction to obtain a total error; determining a minimum error of the total error; and determining a yaw misalignment deviation based on the minimum error.

The main idea of the inventions is to utilize wind data before a yaw event, identify experimental power loss and compare the same with a theoretical power. A theoretical power loss function is applied to find out the yaw misalignment. The present invention uses a passive approach, where the yaw system is calibrated based on data prior to the yaw event so that the wind turbine can adaptively compensate for a yaw misalignment and thereby optimize performance and output. Minimizing the yaw errors of the wind turbines results in an increased efficiency and power production, as well as in more correct inputs for park features like wake adapt and north calibration.

In an embodiment, averaging the data includes a filtering the data.

In an embodiment, the time span is in a range between 30 and 240 s, preferably between 60 and 180 s.

In an embodiment, the yaw misalignment is written into a look-up table which links the minimum error to the yaw misalignment.

In an embodiment, the yaw event is performed, when a yaw error, which is a difference between a target nacelle yaw angle and an actual target nacelle yaw angle, exceeds a predetermined angle. In an embodiment, the yaw error is a range between 3 and 4°. The yaw system tries to compensate for the error.

In an embodiment, the first wind direction is determined by use of a wind sensor, wherein sampled wind direction values are the recorded data of the wind direction, which are averaged in a predetermined time period after the beginning of the time span; and/or the second wind direction is determined by use of a wind sensor, wherein sampled wind direction values are the recorded data of the wind direction, which are averaged in a predetermined time period before the end of the time span.

In an embodiment, the first theoretical performance parameter $P_{\gamma+WD1}$ is calculated as $P_{\gamma+WD1} = \cos\alpha(\gamma + WD1)$; and/or the second theoretical performance parameter $P_{\gamma+WD2}$ is calculated as $P_{\gamma+WD1} = \cos\alpha(\gamma + WD2)$; wherein $\alpha$ is a yaw loss exponent and $\gamma$ is the yaw misalignment.

In an embodiment, the error is calculated as a sum of a first absolute error of the yaw event in the clockwise yaw direction and a second absolute error of the yaw event in the counter-clockwise yaw direction.

In an embodiment, the performance parameter is selected from a group com-prising a power-based parameter of an active electrical or mechanical output power of the wind turbine, and a wind speed-based parameter of an effective wind speed.

According to a second aspect of the invention, a device of calibrating a yaw system of a wind turbine is provided. The wind turbine comprises a rotor having a plurality of rotor blades, each blade being configured to be pitched by a pitch angle about a pitch axis of the blade, the rotor being mounted to a nacelle to rotate about a rotation axis with a rotor speed to drive a generator for producing electrical energy, the nacelle being mounted to a tower to rotate about a yaw axis. The device comprises a performing unit configured to perform a yaw event at a yaw event time in a clockwise direction and a counter-clockwise direction, respectively; a selecting unit configured to select a predetermined time span directly before each yaw event time in the clockwise direction and the counter-clockwise direction; a recording unit configured to record data of a wind direction and a performance parameter in the predetermined time span before each yaw event time in the clockwise direction and the counter-clockwise direction, and averaging the data; a determining unit configured to determine a first experimental performance parameter at the beginning of the time span and a second experimental performance parameter at the end of the time span from the averaged data for each yaw event in the clockwise direction and the counter-clockwise direction; a calculating unit configured to calculate an experimental performance parameter difference between the first and second experimental performance parameters for each yaw event in the clockwise direction and the counter-clockwise direction; a determining unit configured to determine a first wind direction at the beginning of the time span and a second wind direction at the end of the time span from the averaged data for each yaw event in the clockwise direction and the counter-clockwise direction; a calculating unit configured to calculate a first theoretical performance parameter at the beginning of the time span based on the determined first wind direction and a second theoretical performance parameter at the end of the time span based on the determined second wind direction for each yaw event in the clockwise direction and the counter-clockwise direction; a calculating unit configured to calculate a theoretical performance parameter difference between the first and second theoretical performance parameters for each yaw event in the clockwise direction and the counter-clockwise direction; a calculating unit configured to calculate absolute errors between the experimental performance parameter difference and the theoretical performance parameter difference of the yaw events in the clockwise direction and the counter-clockwise direction, respectively; an adding unit configured to add the absolute errors of the yaw events in the clockwise direction and the counter-clockwise direction to obtain a total error; a determining unit configured to determine a minimum error of the total error; and a determining unit configured to determine a yaw misalignment based on the minimum error.

The utilization of data only before a yaw event eliminates possible errors and dynamics that may exist in a yaw controller, e.g., if a dead band or an offset error exist in a yaw control system, the resulting nacelle position might be incorrect. By eliminating uncertainties in the yaw control system possible errors used in the algorithm are also eliminated.

Advantageously, yaw errors can be reduced, the turbine power production (AEP) can be increased, turbine loads and fatigues can be decreased, and the nacelle can be aligned to the wind direction. The present invention does not require to actively yaw the turbine out of the wind direction to estimate the offset. There is no additional cost for the customer. Offsets can be estimated using old data. Unpredictable behaviours from wind sensors data obtained after operational yaws can be avoided so that the calibration is more accurate.

It has to be noted that embodiments of the invention have been described with reference to different subject matters. In particular, some embodiments have been described with reference to apparatus type claims whereas other embodiments have been described with reference to method type claims.

However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1      shows a wind turbine and the different elements thereof according to an embodiment;

Fig. 2      shows a top view of a nacelle of a wind turbine according to an embodiment;

Fig. 3      shows a definition of a yaw direction according to an embodiment;

Fig. 4      shows a top view of a nacelle of a wind turbine and defines different angles according to an embodiment;

Fig. 5      shows recorded data of a wind direction and a nacelle position in a predetermined time span before a yaw event in the clockwise direction according to an embodiment;

Fig. 6      shows recorded data of a filtered yaw error and a power in the predetermined time span before the yaw event in the clockwise direction according to an embodiment;

Fig. 7      shows averaged data of a wind direction and a nacelle position in the predetermined time span before the yaw event in the clockwise direction according to an embodiment;

Fig. 8      shows averaged data of the filtered yaw error and the power in the predetermined time span before the yaw event in the clockwise direction according to an embodiment;

Fig. 9      shows averaged data of a wind direction and a nacelle position in the predetermined time span before the yaw event in the counter-clockwise direction according to an embodiment;

Fig. 10     shows averaged data of the filtered yaw error and the power in the predetermined time span before the yaw event in the counter-clockwise direction according to an embodiment;

Fig. 11     shows power levels read from the averaged power time trajectory according to an embodiment;

Fig. 12     shows averaged data of a wind direction in the predetermined time span before the yaw event in the clockwise direction measured by a primary and a secondary anemometer according to an embodiment;

Fig. 13     shows averaged data of a wind direction in the predetermined time span before the yaw event in the counter-clockwise direction measured by the primary and the secondary anemometer according to an embodiment;

Fig. 14 shows averaged data of a wind direction in the predetermined time span before the yaw event in the counter-clockwise direction measured by a primary and a secondary anemometer according to an embodiment;

Fig. 15 shows theoretical power losses for different yaw loss exponents according to an embodiment; and

Fig. 16 shows the theoretical power losses for starting a yaw event in the clockwise direction and the counter-clockwise direction according to an embodiment.

<u>Detailed Description</u>

The illustrations in the drawings are schematically. It is noted that in different figures, similar or identical elements are provided with the same reference signs.

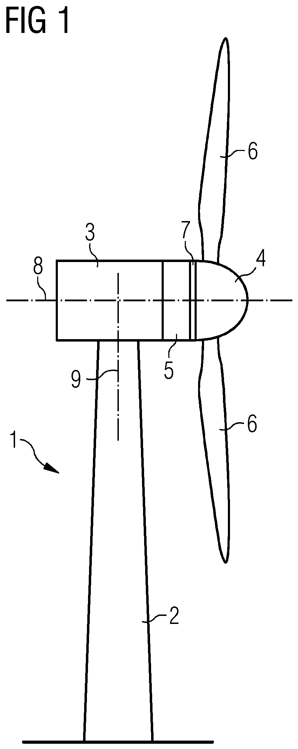

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis 9.

The wind turbine 1 also comprises a rotor 4 with three rotor blades 6 (of which two rotor blades 6 are depicted in Fig. 1). The rotor 4 is mounted rotatable with regard to the nacelle 3 by means of a main bearing 7. The rotor 4 is mounted rotatable about a rotation axis 8 (rotor axis).

The wind turbine 1 furthermore comprises a generator 5. The generator 5 in turn comprises a rotor connecting the generator 5 with the rotor 4. If the rotor 4 is connected directly to the generator 5, the wind turbine 1 is referred to as a gearless, direct-driven wind turbine. Such a generator 5 is referred as direct drive generator 5. As an alternative, the rotor 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor 4 into electrical energy in the shape of an AC power.

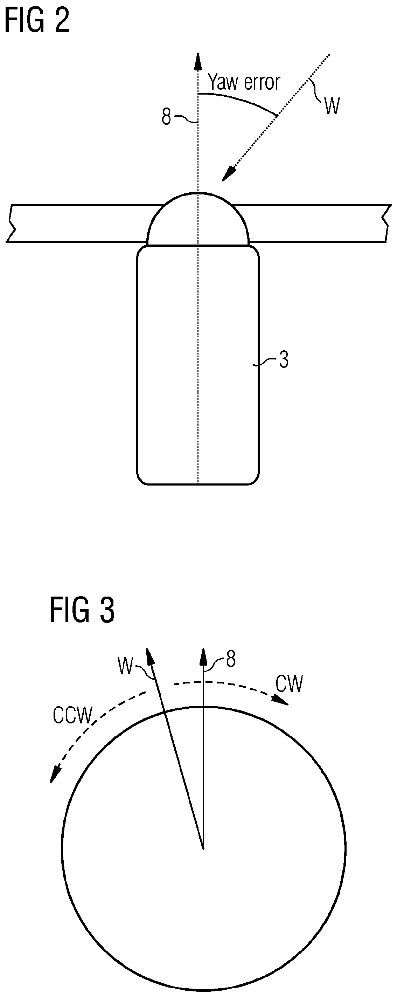

**Fig. 2** shows a top view of a nacelle 3 of a wind turbine 1 according to an embodiment. The wind direction W varies almost continuous and therefore it is desired to adjust the direction of the nacelle 3, which coincides with the rotation axis 8, to ensure that the nacelle 3 is facing the wind. Due to limited yaw capacity, the nacelle 3 can be misaligned to the wind direction; the wind turbine may only be yawing 5 to 10 % of the time. Typically, a certain yaw error is required before the yaw system is activated. A yaw error of approximately 3 to 4° is required for initiating yawing, i.e., a yaw event. This is the dead band of a yaw controller. This means that the wind direction W changes of up to six degrees can occur without the yaw system being activated. Such a change is large enough to affect the performance of the turbine 1. Furthermore, the yaw error evaluated for yaw control can be filtered (averaged/made slower) such that instantaneous yaw errors for a short time exist which are much higher. When the wind direction W overcomes this threshold of the dead band and the nacelle 3 yaws to face the wind, this is defined as an operational yaw event.

**Fig. 3** shows definitions of yaw directions in clockwise and counter-clockwise directions according to an embodiment. The method considers changes in the wind direction leading up to a yaw event in both clockwise (CW) and counter-clockwise (CCW) direction. The definition can be seen in Fig. 2 where the nacelle 3 is illustrated seen from above. Reference sign W designates the relative wind direction and reference sign 8 is the rotation axis which coincides with the actual nacelle orientation.

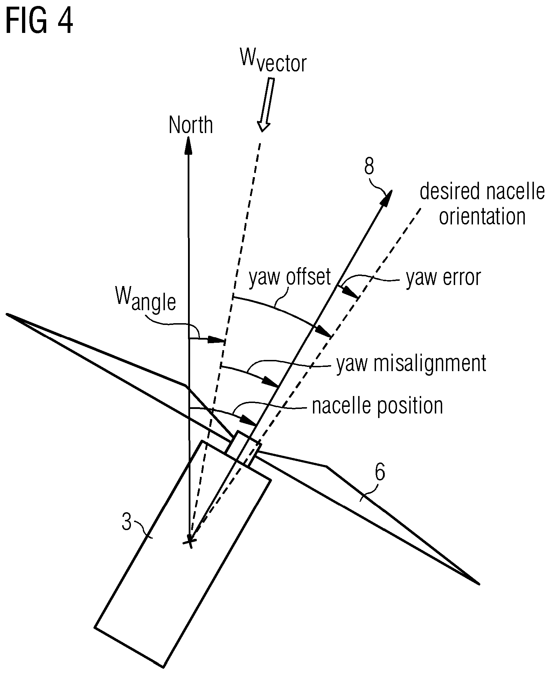

**Fig. 4** shows a top view of a nacelle 3 of a wind turbine 1 and defines different angles according to an embodiment. The aim of the yaw controller is to align the nacelle 3 with a required offset. The offset is generally 0° but in specific cases, the user or wind farm operator may not want the nacelle 3 precisely aligned with the wind direction. The definitions can be seen in Fig. 3 as follows:

The yaw misalignment [deg] is the difference between the nacelle orientation, i.e., the rotation axis 8, and the wind direction Wvector (in the shape of a vector) relative to the cardinal point NORTH. When defined in terms of quantities specified relative to NORTH, the following definitions are valid: The nacelle position [deg] is an angle between NORTH and the rotation axis 8.

The yaw offset is a desired yaw misalignment (i.e., the setpoint/reference signal for the yaw misalignment). The yaw error is a control error in the yaw system, defined by the difference between the current nacelle position and the desired nacelle orientation. The yaw error can also be defined in terms of the previous two definitions

$$\text{yaw error} = \text{yaw Offset} - \text{yaw misalignment [deg].}$$

When no yaw offset is applied, the definition becomes:

$$\text{yaw error} = -\text{yaw misalignment [deg].}$$

The method of calibrating a yaw system of the wind turbine 1 comprises a step of performing a yaw event at a yaw event time T0 in a clockwise direction and a counter-clockwise direction as described with respect to Fig. 2. Furthermore, a predetermined time span directly before the yaw event time T0 is selected for each yaw event in the clockwise direction and a counter-clockwise direction. The time span can be in a range between 30 and 240 s, preferably between 60 and 180 s. In the present embodiments, the time span is selected to be 120 s. Findings suggest for example at least 800 yaw events or samples, which are approximately equal to 11 days.

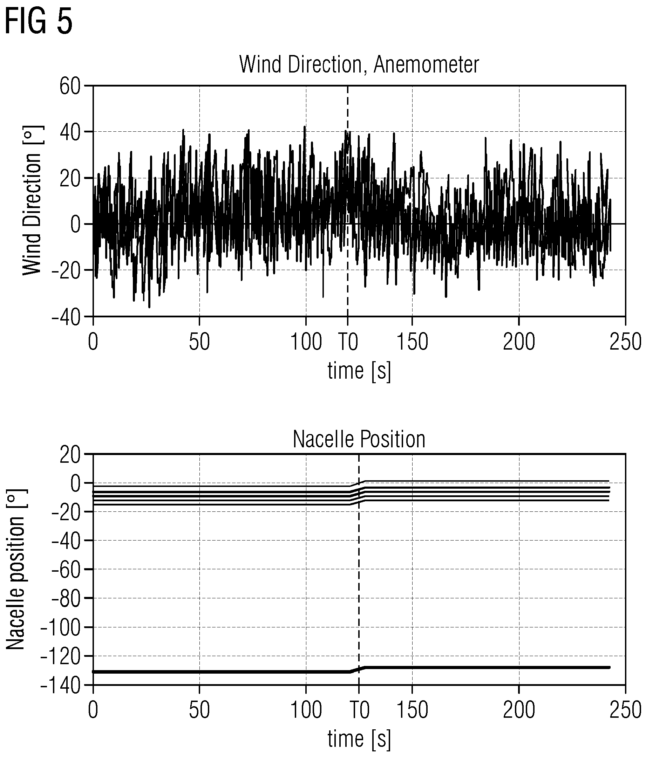

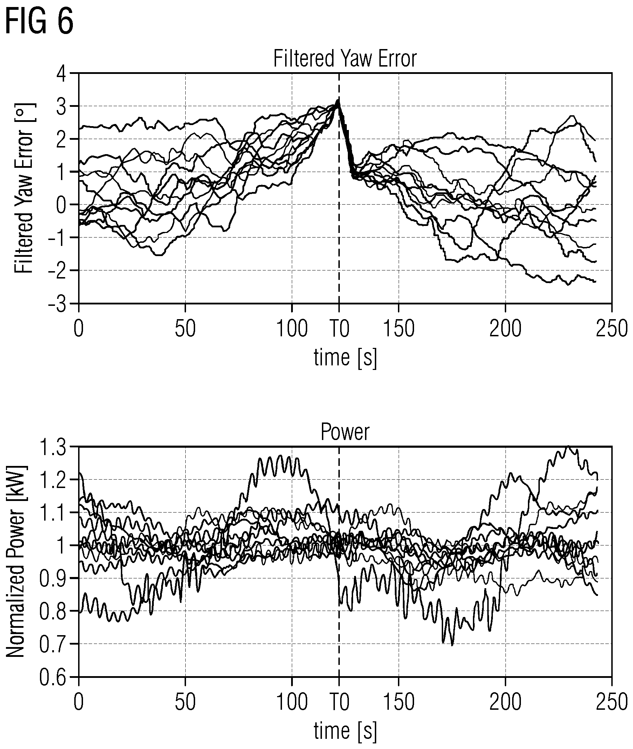

The method of calibrating a yaw system of the wind turbine 1 comprises a step of recording data of a wind direction and a power as a performance parameter in the predetermined time span before the yaw event time T0, as described with reference to Figures 5 and 6.

**Fig. 5** shows recorded data of a wind direction and a nacelle position in the predetermined time span before a yaw event in the clockwise direction according to an embodiment, and **Fig. 6** shows recorded data of a filtered yaw error and a power in the predetermined time span before the yaw event in the clockwise direction according to an embodiment.

In the present invention, it is desired to construct an averaged trajectory of considered signals which will be used to determine the general behavior of a turbine 1 for a given time period. The averaged trajectory represents the general behavior of the performance measures (wind direction and power). For example, in a given time range (e.g., 3 weeks), relevant situations are identified, and time shifted to center yaw events and finally averaged all situations to a single data series which reflects the plurality of events. The steps are elaborated in the following.

In the filtering step, it is desired to isolate the yaw events where the turbine 1 performs a normal operation mode, and to disregard special instances (e.g., startup). Such a filter can consider a normal operation, an underrated power, minimum power above a threshold (e.g., 100 kw), no curtailment, etc.

In addition to that, yaw events can be filtered out where no other yaw events occur within a time window before 120 s.

Also, the data are grouped in CW and CCW directions.

In a resetting step, time stamps for all situations are reset such that when the wind direction drifts off and the yaw controller activates, this can be considered as the start of the yaw event. If the time trajectory is chosen to be 120 s before the yaw event and 120 s after the yaw event, the results can be seen in figures 5 and 6, where 10 timeseries have been put on top of each other for CW (clockwise) yaw events. The power curves have been normalized (for example with reference to a power at the beginning of the time span).

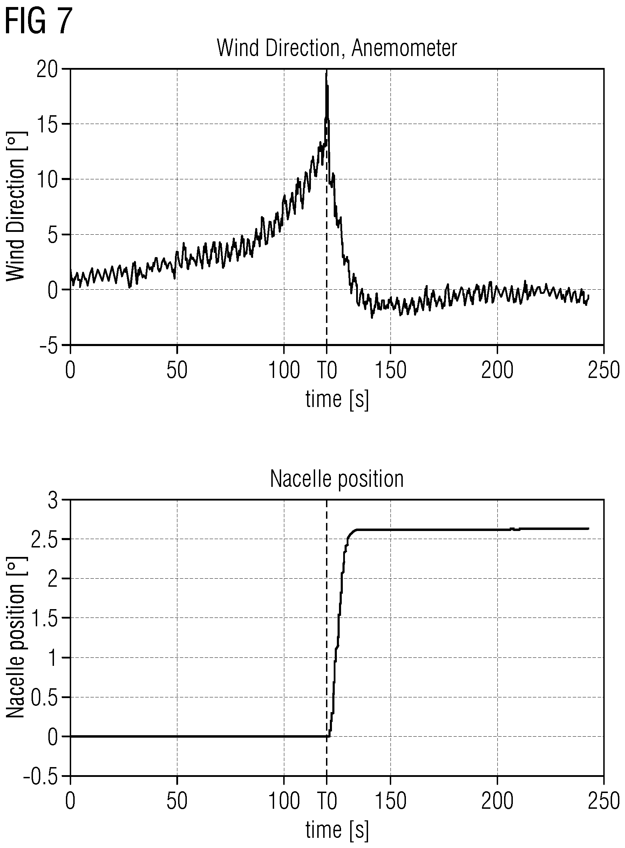

The method of calibrating a yaw system of the wind turbine 1 comprises a step of averaging the data for each yaw event in the clockwise direction and a counter-clockwise direction, as described with reference to Figures 7 to 10. In the step of averaging, when the power signal has been normalized and a bias has been removed for the nacelle position, all signals are averaged for each time step to produce a single timeseries that represents the behavior of the wind turbine 1 for the given time period.

As a result, the averaged trajectories are depicted in Figures 7 to 10. The vertical line symbolizes the yaw event at the yaw event time T0. Averaged trajectories for CW (clockwise) and CCW (counter-clockwise) for the wind turbine 1 can be seen.

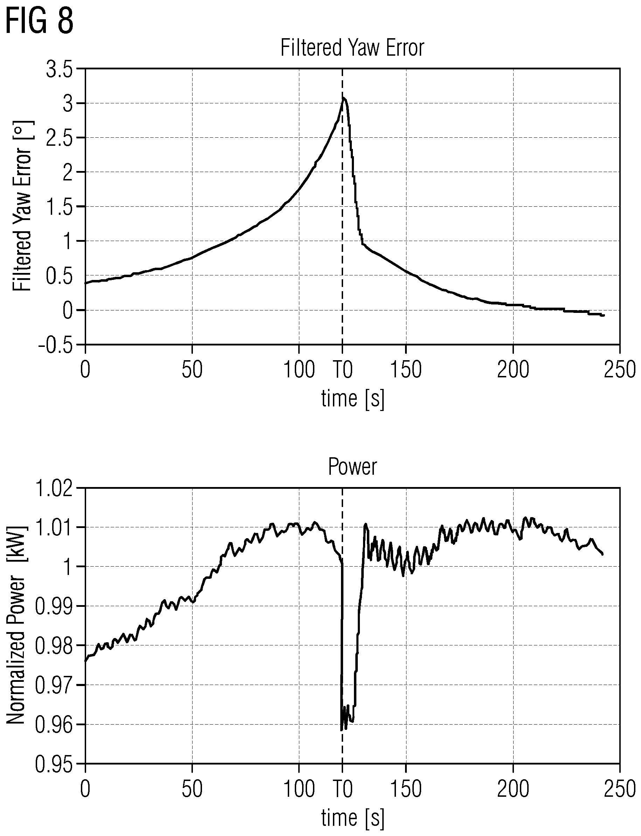

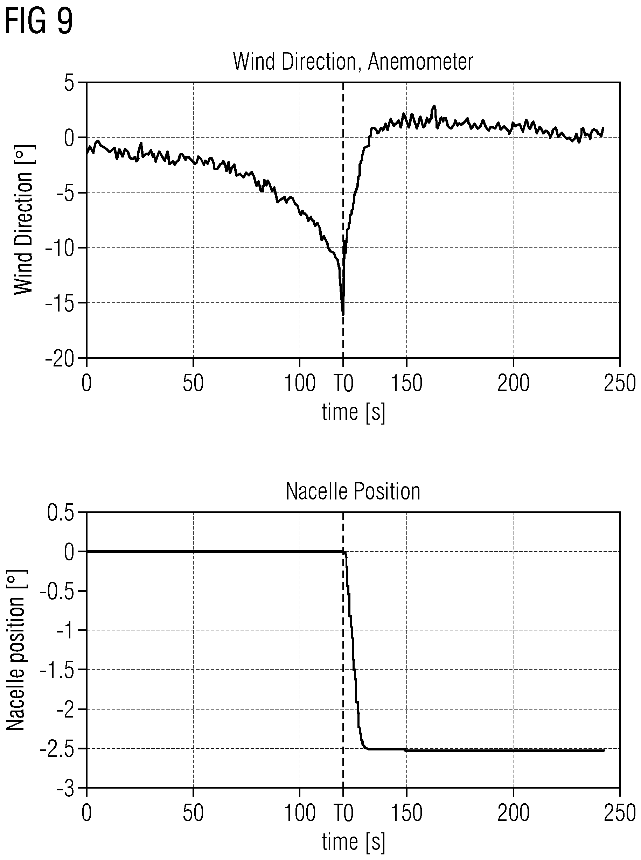

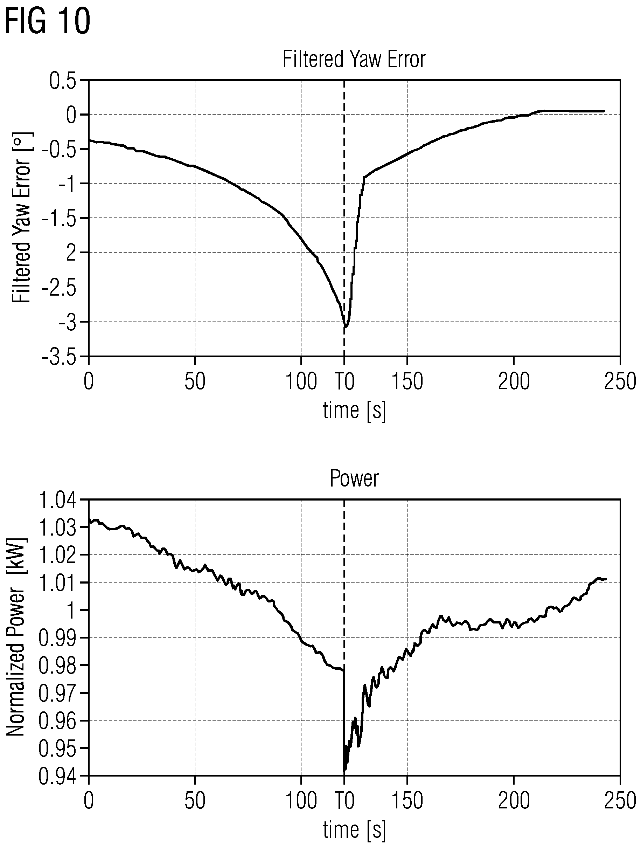

**Fig. 7** shows averaged data of a wind direction and a nacelle position in the predetermined time span before the yaw event in the clockwise direction according to an embodiment, **Fig. 8** shows averaged data of the filtered yaw error and the power in the predetermined time span before the yaw event in the clockwise direction according to an embodiment, **Fig. 9** shows averaged data of a wind direction and a nacelle position in the predetermined time span before the yaw event in the counter-clockwise direction according to an embodiment, and **Fig. 10** shows averaged data of the filtered yaw error and the power in the predetermined time span before the yaw event in the counter-clockwise direction according to an embodiment.

The method of calibrating a yaw system of the wind turbine 1 further comprises a step of determining a first experimental power P1 at the beginning of the time span and a second experimental power P2 at the end of the time span from the averaged data for each yaw event in the clockwise direction and a counter-clockwise direction. For example, the first experimental power P1 at the beginning of the time span is the power at t = 0 s in the lower picture in Fig. 10, and the second experimental power P2 at the end of the time span is the power at t = 120 s in the lower picture in Fig. 10.

The method of calibrating a yaw system of the wind turbine 1 comprises a step of calculating an experimental power difference P2 - P1 between the averaged first and second experimental powers P1, P2 for each yaw event in the clockwise direction and a counter-clockwise direction.

As shown in Figures 7 and 8, a recovery (after the yaw) of power, nacelle position, and filtered yaw error does not match with the wind direction from the anemometer. The figures show the wind direction in normal production surrounded by operational yaw event. It is observed that the yaw event is triggered due to an increasing yaw misalignment of the nacelle up to 15 [deg]. The wind turbine action is a change in the nacelle position of 2.5 [deg]. It is expected that the wind direction and nacelle position should recover equally (change in the nacelle position should be equal to the yaw misalignment.) However, there are unexplainable behaviors of wind direction data after operational yaws. The wind direction and the nacelle position does not recover equally, so that wind data after the yaw can be unreliable. The present invention overcomes this flaw.

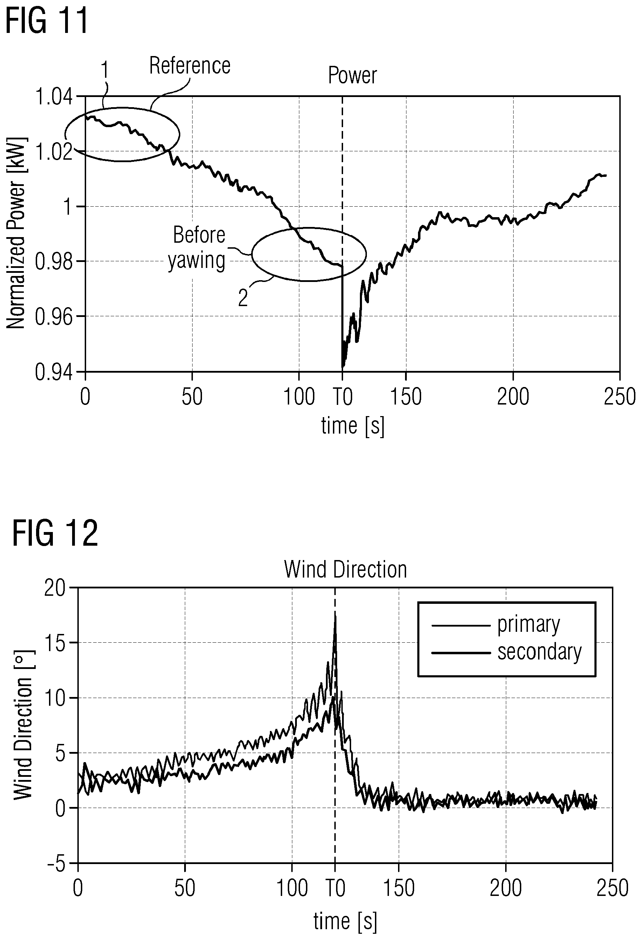

**Fig. 11** shows power levels read from the averaged power time trajectory according to an embodiment, e.g., the averaged power trajectory for a CCW event similar to the bottom picture in Fig. 10, where the yaw event occurs at 120 s. The normalized power output values of P1 and P2 is determined. P1 can be determined by making a mean of the values from 0 s to 40 s:

$$P1_{1:20} = 1.03$$

P2 could be a mean of the values collected 40 s before the yaw event and up to the yaw event:

$$P2_{(120-10:120)} = 0.98$$

The change in power is found and used for further procession:

$$\Delta P_{CCW} = P_2 - P_1 = 0.98 - 1.03 = -0.05$$

The method of calibrating a yaw system of the wind turbine 1 further comprises a step of determining a first wind direction WD1 at the beginning of the time span and a second wind direction WD2 at the end of the time span from the averaged data for each yaw event in the clockwise direction and a counter-clockwise direction, and of calculating a first theoretical power $P_\gamma + WD1$ at the beginning of the time span based on the determined first wind direction WD1 and a second theoretical power $P_\gamma + WD2$ at the end of the time span, based on the determined second wind direction WD2 for each yaw event in the clockwise direction and a counter-clockwise direction, as described in the embodiment of Figures 12 to 16.

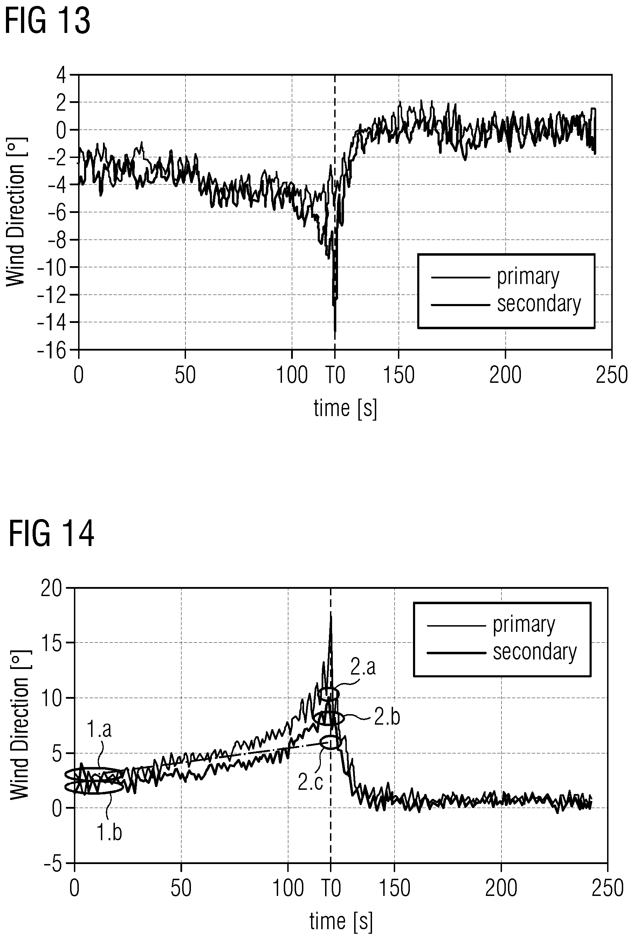

**Fig. 12** shows averaged data of a wind direction in the predetermined time span before the yaw event in the clockwise direction measured by a primary and a secondary anemometer according to an embodiment; **Fig. 13** shows averaged data of a wind direction in the predetermined time span before the yaw event in the counter-clockwise direction measured by the primary and the secondary anemometer according to an embodiment; and **Fig. 14** again shows averaged data of a wind direction in the predetermined time span before the yaw event in the counter-clockwise direction measured by the primary and the secondary anemometer according to an embodiment.

According to the background of the present invention, a passive approach is applied, where a regular yaw event is used (meaning yaw events that occur because the wind is changing), and the nacelle 3 is tracking the wind direction (by the yaw controller). This is contrary to a smart yaw operation, where an offset is actively added on top of the wind direction sensor to increase or decrease the yaw misalignment. The performance data is compared before and after the added offset to determine if the yaw misalignment is either positive or negative (CW or CCW). After a certain number of decisions (e.g. 100), a small offset/step (e.g. 0.3 deg) is then applied to the current offset. An AWDC-method (Automatic-Wind-Direction Calibration, based on data prior to a yaw event) requires a certain amount of collected data in order to compute an offset. Roughly estimates are point towards a least 800 passive yaws.

Advantages of this method are that it is possible to exclude dynamics, and yaw misalignment that may exists in the yaw controller. Furthermore, this method differs from prior knowledge as it does not require data after the yaw event and hereby avoid introducing inaccuracies in sensors (anemometers) and unexplainable behavior in the wind sensor (anemometer) at and after the yaw event.

Next, the behaviors of the wind direction sensors are described. As described before, the exact value of the wind direction is difficult to assess. When considering the behavior before the yaw event, the wind can attain the following development:

- Exponential behavior of the primary sensor,
- Exponential behavior of the secondary sensor,
- Linear behavior of wind direction.

The exponential behavior of the primary and secondary sensors can be seen in Figures 7 to 10. One can chose either of the wind direction behaviors depending on what is considered best for the given situation. In general, results have shown that both the primary and secondary exponential behaviors give good results and that the linear behavior is mostly off.

Fig. 12 particularly shows an example of different exponential behaviors of a primary sensor and a secondary sensor, and Fig. 13 particularly shows an example of a linear behavior on the secondary sensor.

It is to be noted that based on previous investigations, the sensor data just before the yaw event on the primary sensor is believed to be misleading, therefore the data of the primary sensor can be clipped at 10°. The three possible developments for the wind direction can be seen in Fig. 14.

The value of the reference wind direction WD1 before the yaw event can either be:

1.a Average of the first 15 seconds of the primary sensor, if exponential behavior, or linear behavior is chosen.
1.b Average of the first 15 seconds of the secondary sensor if exponential behavior.

The value of the wind direction just before the yaw event WD2 can either be:

2.a Last 10 seconds before the yaw event of the primary sensor, clipped at 10° if exponential behavior is chosen.
2.b Last 10 seconds before the yaw event of the secondary sensor, clipped at 10° if exponential behavior is chosen.
2.c A linear interpolation of the primary sensor data based on the average power of t = [0:15]s and of t = [45:55]s, if linear behavior is chosen.

Assuming an exponential wind direction development and utilizing the primary wind direction sensor, the averaged data are clipped at 10 [deg] for the CW direction in Fig. 14:

$$\mathrm{WD1}_{0:15} = 4°$$

$$\mathrm{WD2}_{(120-10):120} = 10°$$

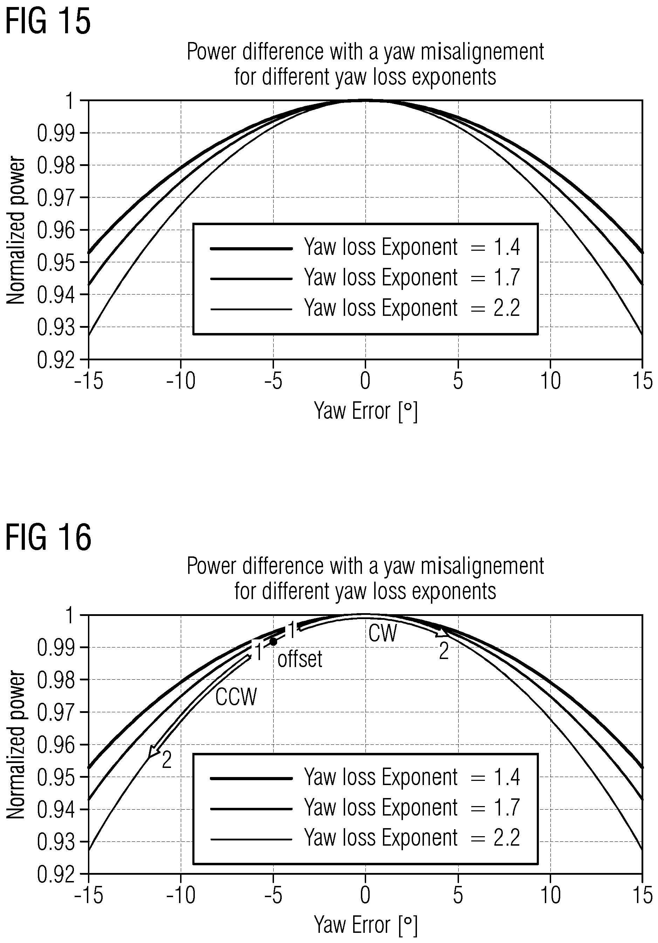

**Fig. 15** shows theoretical power losses for different yaw loss exponents according to an embodiment; and **Fig. 16** shows the theoretical power losses for starting a yaw event in the clockwise direction and the counter-clockwise direction according to an embodiment.

The theoretical power may be expressed in terms of a model e.g., as a relationship indicated by the equation below and seen in Fig. 15:

$$\frac{P_\gamma}{P_0} = \cos^\alpha(\gamma)$$

where $\gamma$ is the yaw misalignment, $\alpha$ is the yaw loss exponent, $P_\gamma$ is the power with a misalignment $\gamma$, and $P_0$ is the power without any yaw misalignment.

The exact value of the yaw loss exponent can be determined in a conventional manner (see Jaime Liew, Albert M. Urbán, and Søren Juhl Andersen, "Analytical model for the power-yaw sensitivity of wind turbines operating in full wake", Wind Energy Science, 31 March 2020). The power losses for different yaw loss exponents can be seen in Fig. 16.

In the following is it assumed that the $P_0 = \cos^\alpha(0°) = 1$ therefore it is assumed that $P_\gamma = \cos^\alpha(\gamma)$. This equation can be for the locations from the averaged trajectories (before the yaw event and just before the yaw event).

$$\mathrm{P}\gamma\mathrm{+WD1} = \cos^\alpha(\gamma\mathrm{+WD1}) \quad \text{and} \quad \mathrm{P}\gamma\mathrm{+WD2} = \cos^\alpha(\gamma\mathrm{+WD2})$$

The method of calibrating a yaw system of a wind turbine 1 further comprises a step of calculating a theoretical power difference P$\gamma$+WD1 - P$\gamma$+WD2 between the first and second theoretical powers P$\gamma$+WD1, P$\gamma$+WD2 for each yaw event in the clockwise direction and a counter-clockwise direction with reference to the embodiment of Figures 15 and 16. Combining the equations yields the theoretical power difference:

$$\Delta\mathrm{P} = \mathrm{P}\gamma\mathrm{+WD1} - \mathrm{P}\gamma\mathrm{+WD2} = \cos^\alpha(\gamma\mathrm{+WD1}) - \cos^\alpha(\gamma\mathrm{+WD2})$$

Fig. 16 shows that for a given offset in the CCW direction, a large power loss is expected whereas in the CW direction the power is supposed to remain relatively stable. If the offset was -10°, the CCW movement would lead to a larger power loss and the CW change would lead to a power gain, as seen on the example averaged power time trajectories Figures 7 to 10.

For example, the theoretical power changes when varying the yaw misalignment $\gamma$ [-20:20] and the yaw loss exponent $\alpha$ [1.4; 1.7; 2.2] in the CW direction:

$$\Delta\mathrm{P}_{\mathrm{CW}} = \cos^\alpha(\gamma + 4°) - \cos^\alpha(\gamma + 10°)$$

The same is done for the CCW direction:

$$\Delta P_{CCW} = \cos^\alpha (\gamma + WD1_{CCW}) - \cos^\alpha (\gamma + WD1_{CCW})$$

The method of calibrating a yaw system of a wind turbine 1 further comprises a step of calculating an absolute error (Ecw + Eccw) between the experimental power difference (P2 - P1) and the theoretical power difference (Pγ+WD1 - Pγ+WD2) of the yaw events in the clockwise direction and a counter-clockwise direction, for example like:

$$Ecw + Eccw = abs(\Delta P_{theoryCW} - \Delta P_{expCW}) + abs(\Delta P_{theoryCCW} - \Delta P_{expCCW})$$

$$= abs((P\gamma+WD1 - P\gamma+WD2)_{CW} - (P2 - P1)_{CW}) +$$

$$abs((P\gamma+WD1 - P\gamma+WD2)_{CCW} - (P2 - P1)_{CCW}).$$

The method of calibrating a yaw system of a wind turbine 1 further comprises a step of determining a minimum error, and eventually determining a yaw misalignment based on the minimum error.

For example, the minimum error in the matrix of errors can be determined like:

$$error = \min(Ecw + Eccw)$$

This error corresponds to a specific yaw error offset which is the wind direction deviation.

By adjusting the found yaw error offset to the yaw controller, the performance measure should increase.

The performance parameter is not limited to the power but can be any power-based parameter which reflects an active electrical or mechanical output power of the wind turbine 1.

The performance parameter can be a wind speed-based parameter of an effective wind speed, i.e., a wind speed component parallel to the nacelle 3, which can provide a consistent measure of the turbine performance at all wind speeds. This parameter can be estimated from turbine models, the actual power production, the actual rotor speed, and the actual pitch angle. This is possible as all possible combinations of wind speed, rotor speed, and pitch angle will result in a theoretical power output, and thus the effective wind speed can be estimated if the actual operational values are known.

If the estimated effective wind speed is derived from the rotational speed, active electrical power, pitch angle and model data, this measure reflects the underlying, or "true", momentary energy available in the incoming wind and turbine system, and thus has the inherent advantage of being continuous up to and above the maximum rated power of the turbine, which is otherwise saturated at some upper level due to physical limitations in, e.g., the generator and other mechanical components.

With reference to Figures 15 and 16, the relation

$$P_\gamma = \cos^\alpha(\gamma) * P_0$$

holds where $\gamma$ is the yaw misalignment, $\alpha$ is the yaw loss exponent, $P\gamma$ is the power with a misalignment $\gamma$, and $P0$ is the power without any yaw misalignment. A similar relation holds for the effective wind speed W, i.e.,

$$W_\gamma = \cos^\alpha(\gamma) * W_0$$

where $\gamma$ is the yaw misalignment, $\alpha$ is the yaw loss exponent, $W\gamma$ is the effective wind speed with a misalignment $\gamma$, and $W0$ is the effective wind speed without any yaw misalignment. However, the yaw loss exponent $\alpha$ for the effective wind speed might be different from the yaw loss exponent $\alpha$ of the power.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. A method of calibrating a yaw system of a wind turbine, the wind turbine (1) comprising a rotor (4) having a plurality of rotor blades (6), each blade (6) being configured to be pitched by a pitch angle about a pitch axis of the blade (6), the rotor (4) being mounted to a nacelle (3) to rotate about a rotation axis (8) with a rotor speed to drive a generator (5) for producing electrical energy, the nacelle (3) being mounted to a tower (2) to rotate about a yaw axis (9), the method comprising steps of:

performing a yaw event at a yaw event time (T0) in a clockwise direction and a counter-clockwise direction, respectively;

selecting a predetermined time span directly before each yaw event time (T0) in the clockwise direction and the counter-clockwise direction;

recording data of a wind direction and a performance parameter in the predetermined time span before each yaw event time (T0) in the clockwise direction and the counter-clockwise direction, and averaging the data;

determining a first experimental performance parameter (P1) at the beginning of the time span and a second experimental performance parameter (P2) at the end of the time span from the averaged data for each yaw event in the clockwise direction and the counter-clockwise direction;

calculating an experimental performance parameter difference (P2 - P1) between the first and second experimental performance parameters (P1, P2) for each yaw event in the clockwise direction and the counter-clockwise direction;

determining a first wind direction (WD1) at the beginning of the time span and a second wind direction (WD2) at the end of the time span from the averaged data for each yaw event in the clockwise direction and the counter-clockwise direction;

calculating a first theoretical performance parameter (P$\gamma$+WD1) at the beginning of the time span based on the determined first wind direction (WD1) and a second theoretical performance parameter (P$\gamma$+WD2) at the end of the time span based on the determined second wind direction (WD2) for each yaw event in the clockwise direction and the counter-clockwise direction;

calculating a theoretical performance parameter difference (P$\gamma$+WD1 - P$\gamma$+WD2) between the first and second theoretical performance parameters (P$\gamma$+WD1, P$\gamma$+WD2) for each yaw event in the clockwise direction and the counter-clockwise direction;

calculating absolute errors (Ecw, Eccw) between the experimental performance parameter difference (P2 - P1) and the theoretical performance parameter difference (P$\gamma$+WD1 - P$\gamma$+WD2) of the yaw events in the clockwise direction and the counter-clockwise direction, respectively;

adding the absolute errors (Ecw, Eccw) of the yaw events in the clockwise direction and the counter-clockwise direction to obtain a total error (Ecw + Eccw);

determining a minimum error (idx) of the total error (Ecw + Eccw); and

determining a yaw misalignment based on the minimum error (idx).

2.  The method according to the preceding claim, wherein
    averaging the data includes a filtering the data.

3.  The method according to any one of the preceding claims, wherein
    the time span is in a range between 30 and 240 s, preferably between 60 and 180 s.

4.  The method according to any one of the preceding claims, wherein
    the yaw misalignment is written into a look-up table which links the minimum error to the yaw misalignment.

5.  The method according to any one of the preceding claims, wherein
    the yaw event is performed, when a yaw error, which is a difference between a target nacelle yaw angle and an actual target nacelle yaw angle, exceeds a predetermined angle.

6.  The method according to the preceding claim, wherein
    the yaw error is a range between 3 and 4°.

7.  The method according to any one of the preceding claims, wherein

    the first wind direction (WD1) is determined by use of a wind sensor, wherein sampled wind direction values are the recorded data of the wind direction, which are averaged in a predetermined time period after the beginning of the time span; and/or

    the second wind direction (WD2) is determined by use of a wind sensor, wherein sampled wind direction values are the recorded data of the wind direction, which are averaged in a predetermined time period before the end of the time span.

8.  The method according to any one of the preceding claims, wherein

    the first theoretical performance parameter Pγ+WD1 is calculated as

    $$P\gamma + WD1 = \cos^{\alpha}(\gamma + WD1);$$

    and/or
    the second theoretical performance parameter Pγ+WD2 is calculated as

    $$P\gamma + WD1 = \cos^{\alpha}(\gamma + WD2),$$

    wherein $\alpha$ is a yaw loss exponent and $\gamma$ is the yaw misalignment.

9.  The method according to any one of the preceding claims, wherein
    the error (Ecw + Eccw) is calculated as a sum of a first absolute error (Ecw) of the yaw event in the clockwise yaw direction and a second absolute error (Eccw) of the yaw event in the counter-clockwise yaw direction.

10. The method according to any one of the preceding claims, wherein
    the performance parameter is selected from a group com-prising a power-based parameter of an active electrical or mechanical output power of the wind turbine (1), and a wind speed-based parameter of an effective wind speed.

11. A device of calibrating a yaw system of a wind turbine, the wind turbine (1) comprising a rotor (4) having a plurality of rotor blades (6), each blade (6) being configured to be pitched by a pitch angle about a pitch axis of the blade (6), the rotor (4) being mounted to a nacelle (3) to rotate about a rotation axis (8) with a rotor speed to drive a generator (5) for producing electrical energy, the nacelle (3) being mounted to a tower (2) to rotate about a yaw axis (9), the device comprises:

    a performing unit configured to perform a yaw event at a yaw event time (T0) in a clockwise direction and a counter-clockwise direction, respectively;
    a selecting unit configured to select a predetermined time span directly before each yaw event time (T0) in the clockwise direction and the counter-clockwise direction;
    a recording unit configured to record data of a wind direction and a performance parameter in the predetermined time span before each yaw event time (T0) in the clockwise direction and the counter-clockwise direction, and averaging the data;
    a determining unit configured to determine a first experimental performance parameter (P1) at the beginning of the time span and a second experimental performance parameter (P2) at the end of the time span from the averaged data for each yaw event in the clockwise direction and the counter-clockwise direction;
    a calculating unit configured to calculate an experimental performance parameter difference (P2 - P1) between the first and second experimental performance parameters (P1, P2) for each yaw event in the clockwise direction and the counter-clockwise direction;
    a determining unit configured to determine a first wind direction (WD1) at the beginning of the time span and a second wind direction (WD2) at the end of the time span from the averaged data for each yaw event in the clockwise direction and the counter-clockwise direction;
    a calculating unit configured to calculate a first theoretical performance parameter (Pγ+WD1) at the beginning of the time span based on the determined first wind direction (WD1) and a second theoretical performance parameter (Pγ+WD2) at the end of the time span based on the determined second wind direction (WD2) for each yaw event in the clockwise direction and the counter-clockwise direction;
    a calculating unit configured to calculate a theoretical performance parameter difference (Pγ+WD1 - Pγ+WD2) between the first and second theoretical performance parameters (Pγ+WD1, Pγ+WD2) for each yaw event in the clockwise direction and the counter-clockwise direction;
    a calculating unit configured to calculate absolute errors (Ecw, Eccw) between the experimental performance parameter difference (P2 - P1) and the theoretical performance parameter difference (Pγ+WD1 - Pγ+WD2) of the yaw events in the clockwise direction and the counter-clockwise direction, respectively;
    an adding unit configured to add the absolute errors (Ecw, Eccw) of the yaw events in the clockwise direction and the counter-clockwise direction to obtain a total error (Ecw + Eccw);
    a determining unit configured to determine a minimum error (idx) of the total error (Ecw + Eccw); and
    a determining unit configured to determine a yaw misalignment based on the minimum error.

**Patentansprüche**

1. Verfahren zum Kalibrieren eines Giersystems einer Windturbine, wobei die Windturbine (1) einen Rotor (4) mit mehreren Rotorblättern (6) umfasst, wobei jedes Blatt (6) eingerichtet ist, um durch einen Neigungswinkel um eine Neigungsachse des Blatts (6) geneigt zu werden, wobei der Rotor (4) an einer Gondel (3) montiert ist, um sich um eine Drehachse (8) mit einer Rotordrehzahl zu drehen, um einen Generator (5) zum Erzeugen elektrischer Energie anzutreiben, wobei die Gondel (3) auf einem Turm (2) montiert ist, um sich um eine Gierachse (9) zu drehen, das Verfahren die folgenden Schritte umfassend:

   Durchführen eines Gierereignisses zu einem Gierereigniszeitpunkt (T0) im Uhrzeigersinn bzw. gegen den Uhrzeigersinn;
   Auswählen einer vorbestimmten Zeitspanne unmittelbar vor jedem Gierereigniszeitpunkt (T0) im Uhrzeigersinn und gegen den Uhrzeigersinn;
   Aufzeichnen von Daten einer Windrichtung und eines Leistungsparameters in der vorbestimmten Zeitspanne vor jedem Gierereigniszeitpunkt (T0) im Uhrzeigersinn und gegen den Uhrzeigersinn und Mitteln der Daten;
   Bestimmen eines ersten experimentellen Leistungsparameters (P1) zu Beginn der Zeitspanne und eines zweiten experimentellen Leistungsparameters (P2) am Ende der Zeitspanne aus den gemittelten Daten für jedes Gierereignis im Uhrzeigersinn und gegen den Uhrzeigersinn;
   Berechnen einer experimentellen Leistungsparameterdifferenz (P2 - P1) zwischen dem ersten und dem zweiten experimentellen Leistungsparameter (P1, P2) für jedes Gierereignis im Uhrzeigersinn und gegen den Uhrzeigersinn;
   Bestimmen einer ersten Windrichtung (WD1) zu Beginn der Zeitspanne und einer zweiten Windrichtung (WD2) am Ende der Zeitspanne aus den gemittelten Daten für jedes Gierereignis im Uhrzeigersinn und gegen den Uhrzeigersinn;
   Berechnen eines ersten theoretischen Leistungsparameters (P$\gamma$ + WD1) zu Beginn der Zeitspanne auf Grundlage der bestimmten ersten Windrichtung (WD1) und eines zweiten theoretischen Leistungsparameters (P$\gamma$ + WD2) am Ende der Zeitspanne auf Grundlage der bestimmten zweiten Windrichtung (WD2) für jedes Gierereignis im Uhrzeigersinn und gegen den Uhrzeigersinn;
   Berechnen einer theoretischen Leistungsparameterdifferenz (P$\gamma$ + WD1 - P$\gamma$ + WD2) zwischen dem ersten und dem zweiten theoretischen Leistungsparameter (P$\gamma$ + WD1, P$\gamma$ + WD2) für jedes Gierereignis im Uhrzeigersinn und gegen den Uhrzeigersinn;
   Berechnen absoluter Fehler (Ecw, Eccw) zwischen der experimentellen Leistungsparameterdifferenz (P2 - P1) und der theoretischen Leistungsparameterdifferenz (P$\gamma$ + WD1 - P$\gamma$ + WD2) der Gierereignisse im Uhrzeigersinn bzw. gegen den Uhrzeigersinn;
   Addieren der absoluten Fehler (Ecw, Eccw) der Gierereignisse im Uhrzeigersinn und gegen den Uhrzeigersinn, um einen Gesamtfehler (Ecw + Eccw) zu erlangen;
   Bestimmen eines Minimalfehlers (idx) des Gesamtfehlers (Ecw + Eccw); und
   Bestimmen einer Gierfehlausrichtung auf Grundlage des Minimalfehlers (idx).

2. Verfahren nach dem vorhergehenden Anspruch, wobei Mitteln der Daten ein Filtern der Daten umfasst.

3. Verfahren nach einem der vorhergehenden Ansprüche, wobei die Zeitspanne in einem Bereich zwischen 30 und 240 s, vorzugsweise zwischen 60 und 180 s, liegt.

4. Verfahren nach einem der vorhergehenden Ansprüche, wobei die Gierfehlausrichtung in eine Nachschlagtabelle geschrieben wird, die den Minimalfehler mit der Gierfehlausrichtung verknüpft.

5. Verfahren nach einem der vorhergehenden Ansprüche, wobei das Gierereignis durchgeführt wird, wenn ein Gierfehler, der eine Differenz zwischen einem Zielgierwinkel der Gondel und einem tatsächlichen Zielgierwinkel der Gondel ist, einen vorbestimmten Winkel übersteigt.

6. Verfahren nach einem der vorhergehenden Ansprüche, wobei der Gierfehler in einem Bereich zwischen 3 und 4° liegt.

7. Verfahren nach einem der vorhergehenden Ansprüche, wobei die erste Windrichtung (WD1) unter Verwendung eines Windsensors bestimmt wird, wobei abgetastete Windrichtungswerte die aufgezeichneten Daten der Windrichtung sind, die in einer vorbestimmten Zeitperiode nach dem Beginn der Zeitspanne gemittelt werden; und/oder
   die zweite Windrichtung (WD2) unter Verwendung eines Windsensors bestimmt wird, wobei abgetastete Windrichtungswerte die aufgezeichneten Daten der Windrichtung sind, die in einer vorbestimmten Zeitperiode vor dem Ende der Zeitspanne gemittelt werden.

8. Verfahren nach einem der vorhergehenden Ansprüche, wobei der erste theoretische Leistungsparameter $P\gamma + WD1$ berechnet wird als

$$P\gamma + WD1 = \cos^\alpha (\gamma + WD1);$$

und/oder

der zweite theoretische Leistungsparameter $P\gamma + WD2$ berechnet wird als

$$P\gamma + WD1 = \cos^\alpha (\gamma + WD2),$$

wobei $\alpha$ ein Gierverlust-Exponent ist und $\gamma$ die Gierfehlausrichtung ist.

9. Verfahren nach einem der vorhergehenden Ansprüche, wobei der Fehler (Ecw + Eccw) als eine Summe eines ersten absoluten Fehlers (Ecw) des Gierereignisses im Uhrzeigersinn und eines zweiten absoluten Fehlers (Eccw) des Gierereignisses gegen den Uhrzeigersinn berechnet wird.

10. Verfahren nach einem der vorhergehenden Ansprüche, wobei der Leistungsparameter aus einer Gruppe ausgewählt ist, umfassend einen leistungsbasierten Parameter einer aktiven elektrischen oder mechanischen Ausgangsleistung der Windturbine (1) und einen auf Windgeschwindigkeit basierenden Parameter einer effektiven Windgeschwindigkeit.

11. Vorrichtung zum Kalibrieren eines Giersystems einer Windturbine, wobei die Windturbine (1) einen Rotor (4) mit mehreren Rotorblättern (6) umfasst, wobei jedes Blatt (6) eingerichtet ist, um durch einen Neigungswinkel um eine Neigungsachse des Blatts (6) geneigt zu werden, wobei der Rotor (4) an einer Gondel (3) montiert ist, um sich um eine Drehachse (8) mit einer Rotordrehzahl zu drehen, um einen Generator (5) zum Erzeugen elektrischer Energie anzutreiben, wobei die Gondel (3) auf einem Turm (2) montiert ist, um sich um eine Gierachse (9) zu drehen, wobei die Vorrichtung Folgendes umfasst:

eine Durchführungseinheit, die eingerichtet ist, um ein Gierereignis zu einem Giererereigniszeitpunkt (T0) im Uhrzeigersinn bzw. gegen den Uhrzeigersinn durchzuführen;
eine Auswahleinheit, die eingerichtet ist, um eine vorbestimmte Zeitspanne unmittelbar vor jedem Giererereigniszeitpunkt (T0) im Uhrzeigersinn und gegen den Uhrzeigersinn auszuwählen;
eine Aufzeichnungseinheit, die eingerichtet ist, um Daten einer Windrichtung und eines Leistungsparameters in der vorbestimmten Zeitspanne vor jedem Giererereigniszeitpunkt (T0) im Uhrzeigersinn und gegen den Uhrzeigersinn aufzuzeichnen und die Daten zu mitteln;
eine Bestimmungseinheit, die eingerichtet ist, um einen ersten experimentellen Leistungsparameter (P1) zu Beginn der Zeitspanne und einen zweiten experimentellen Leistungsparameter (P2) am Ende der Zeitspanne aus den gemittelten Daten für jedes Gierereignis im Uhrzeigersinn und gegen den Uhrzeigersinn zu bestimmen;
eine Berechnungseinheit, die eingerichtet ist, um eine experimentelle Leistungsparameterdifferenz (P2 - P1) zwischen dem ersten und dem zweiten experimentellen Leistungsparameter (P1, P2) für jedes Gierereignis im Uhrzeigersinn und gegen den Uhrzeigersinn zu berechnen;
eine Bestimmungseinheit, die eingerichtet, um eine erste Windrichtung (WD1) zu Beginn der Zeitspanne und eine zweite Windrichtung (WD2) am Ende der Zeitspanne aus den gemittelten Daten für jedes Gierereignis im Uhrzeigersinn und gegen den Uhrzeigersinn zu bestimmen;
eine Berechnungseinheit, die eingerichtet ist, um einen ersten theoretischen Leistungsparameter (P$\gamma$ + WD1) zu Beginn der Zeitspanne auf Grundlage der bestimmten ersten Windrichtung (WD1) und einen zweiten theoretischen Leistungsparameter (P$\gamma$ + WD2) am Ende der Zeitspanne auf Grundlage der bestimmten zweiten Windrichtung (WD2) für jedes Gierereignis im Uhrzeigersinn und gegen den Uhrzeigersinn zu berechnen;
eine Berechnungseinheit, die eingerichtet ist, um eine theoretische Leistungsparameterdifferenz (P$\gamma$ + WD1 - P$\gamma$ + WD2) zwischen dem ersten und dem zweiten theoretischen Leistungsparameter (P$\gamma$ + WD1, P$\gamma$ + WD2) für jedes Gierereignis im Uhrzeigersinn und gegen den Uhrzeigersinn zu berechnen;
eine Berechnungseinheit, die eingerichtet ist, um absolute Fehler (Ecw, Eccw) zwischen der experimentellen Leistungsparameterdifferenz (P2 - P1) und der theoretischen Leistungsparameterdifferenz (P$\gamma$ + WD1 - P$\gamma$ + WD2) der Gierereignisse im Uhrzeigersinn bzw. gegen den Uhrzeigersinn zu berechnen;

eine Addiereinheit, die eingerichtet ist, um die absoluten Fehler (Ecw, Eccw) der Gierereignisse im Uhrzeigersinn und gegen den Uhrzeigersinn zu addieren, um einen Gesamtfehler (Ecw + Eccw) zu erlangen;

eine Bestimmungseinheit, die eingerichtet ist, um einen Minimalfehler (idx) des Gesamtfehlers (Ecw + Eccw) zu bestimmen; und

eine Bestimmungseinheit, die eingerichtet ist, um eine Gierfehlausrichtung auf Grundlage des Minimalfehlers zu bestimmen.

## Revendications

1. Procédé d'étalonnage d'un système de lacet d'une éolienne, l'éolienne (1) comprenant un rotor (4) ayant une pluralité de pales de rotor (6), chaque pale (6) étant configurée pour tanguer d'un angle de tangage autour d'un axe de tangage de la pale (6), le rotor (4) étant monté sur une nacelle (3) pour tourner autour d'un axe de rotation (8) avec une vitesse de rotor pour entraîner un générateur (5) afin de produire de l'énergie électrique, la nacelle (3) étant montée sur une tour (2) pour tourner autour d'un axe de lacet (9), le procédé comprenant les étapes de :

exécution d'un événement de lacet à un moment d'événement de lacet (T0) dans le sens horaire et dans le sens antihoraire, respectivement ;

sélection d'un intervalle de temps prédéterminé directement avant chaque moment d'événement de lacet (T0) dans le sens horaire et dans le sens antihoraire ;

enregistrement de données d'une direction du vent et d'un paramètre de performance dans l'intervalle de temps prédéterminé avant chaque moment d'événement de lacet (T0) dans le sens horaire et dans le sens antihoraire, et calcul de la moyenne des données ;

détermination d'un premier paramètre de performance expérimentale (P1) au début de l'intervalle de temps et d'un deuxième paramètre de performance expérimentale (P2) à la fin de l'intervalle de temps à partir des données moyennées pour chaque événement de lacet dans le sens horaire et dans le sens antihoraire ;

calcul d'une différence de paramètre de performance expérimentale (P2 - P1) entre les premier et deuxième paramètres de performance expérimentale (P1, P2) pour chaque événement de lacet dans le sens horaire et dans le sens antihoraire ;

détermination d'une première direction du vent (WD1) au début de l'intervalle de temps et d'une deuxième direction du vent (WD2) à la fin de l'intervalle de temps à partir des données moyennées pour chaque événement de lacet dans le sens horaire et dans le sens antihoraire ;

calcul d'un premier paramètre de performance théorique (P$\gamma$+WD1) au début de l'intervalle de temps sur la base de la première direction du vent déterminée (WD1) et d'un deuxième paramètre de performance théorique (P$\gamma$+WD2) à la fin de l'intervalle de temps sur la base de la deuxième direction du vent déterminée (WD2) pour chaque événement de lacet dans le sens horaire et dans le sens antihoraire ;

calcul d'une différence de paramètre de performance théorique (P$\gamma$+WD1 - P$\gamma$+WD2) entre les premier et deuxième paramètre de performance théorique (P$\gamma$+WD1, P$\gamma$+WD2) pour chaque événement de lacet dans le sens horaire et dans le sens antihoraire ;

calcul d'erreurs absolues (Ecw, Eccw) entre la différence de paramètre de performance expérimentale (P2 - P1) et la différence de paramètre de performance théorique (P$\gamma$+WD1 - P$\gamma$+WD2) des événements de lacet dans le sens horaire et dans le sens antihoraire, respectivement ;

addition des erreurs absolues (Ecw, Eccw) des événements de lacet dans le sens horaire et dans le sens antihoraire pour obtenir une erreur totale (Ecw + Eccw) ;

détermination d'une erreur minimale (idx) de l'erreur totale (Ecw + Eccw) ; et

détermination d'un désalignement en lacet sur la base de l'erreur minimale (idx).

2. Procédé selon la revendication précédente, dans lequel le calcul de la moyenne des données comprend un filtrage des données.

3. Procédé selon l'une quelconque des revendications précédentes, dans lequel l'intervalle de temps est compris entre 30 et 240 s, de préférence entre 60 et 180 s.

4. Procédé selon l'une quelconque des revendications précédentes, dans lequel le désalignement en lacet est inscrit dans une table de recherche qui relie l'erreur minimale au désalignement en lacet.

5. Procédé selon l'une quelconque des revendications précédentes, dans lequel l'événement de lacet est exécuté lorsqu'une erreur de lacet, qui est une différence entre un angle de lacet cible de nacelle et un angle de lacet cible réel de nacelle, dépasse un angle prédéterminé.

6. Procédé selon la revendication précédente, dans lequel l'erreur de lacet est comprise entre 3 et 4°.

7. Procédé selon l'une quelconque des revendications précédentes, dans lequel

la première direction du vent (WD1) est déterminée par l'utilisation d'un capteur de vent, dans lequel les valeurs de direction du vent échantillonnées sont les données enregistrées de la direction du vent, qui sont moyennées dans une période de temps prédéterminée après le début de l'intervalle de temps ; et/ou
la deuxième direction du vent (WD2) est déterminée par l'utilisation d'un capteur de vent, dans lequel les valeurs de direction du vent échantillonnées sont les données enregistrées de la direction du vent, qui sont moyennées dans une période de temps prédéterminée avant la fin de l'intervalle de temps.

8. Procédé selon l'une quelconque des revendications précédentes, dans lequel

le premier paramètre de performance théorique $P\gamma+WD1$ est calculé comme suit

$$P\gamma+WD1 = \cos^{\alpha}(\gamma + WD1) ;$$

et/ou
le deuxième paramètre de performance théorique $P\gamma+WD2$ est calculé comme suit

$$P\gamma+WD1 = \cos^{\alpha}(\gamma + WD2),$$

où $\alpha$ est un exposant de perte en lacet et $\gamma$ est le désalignement en lacet.

9. Procédé selon l'une quelconque des revendications précédentes, dans lequel
l'erreur (Ecw + Eccw) est calculée comme une somme d'une première erreur absolue (Ecw) de l'événement de lacet dans le sens horaire et d'une deuxième erreur absolue (Eccw) de l'événement de lacet dans le sens antihoraire.

10. Procédé selon l'une quelconque des revendications précédentes, dans lequel
le paramètre de performance est choisi dans un groupe comprenant un paramètre basé sur la puissance d'une puissance de sortie électrique ou mécanique active de l'éolienne (1), et un paramètre basé sur la vitesse du vent d'une vitesse effective du vent.

11. Dispositif d'étalonnage d'un système de lacet d'une éolienne, l'éolienne (1) comprenant un rotor (4) ayant une pluralité de pales de rotor (6), chaque pale (6) étant configurée pour tanguer d'un angle de tangage autour d'un axe de tangage de la pale (6), le rotor (4) étant monté sur une nacelle (3) pour tourner autour d'un axe de rotation (8) avec une vitesse de rotor pour entraîner un générateur (5) afin de produire de l'énergie électrique, la nacelle (3) étant montée sur une tour (2) pour tourner autour d'un axe de lacet (9), le dispositif comprend :

une unité d'exécution configurée pour exécuter un événement de lacet à un moment d'événement de lacet (T0) dans un sens horaire et dans un sens antihoraire, respectivement ;
une unité de sélection configurée pour sélectionner un intervalle de temps prédéterminé directement avant chaque moment d'événement de lacet (T0) dans le sens horaire et dans le sens antihoraire ;
une unité d'enregistrement configurée pour enregistrer des données d'une direction du vent et d'un paramètre de performance dans l'intervalle de temps prédéterminé avant chaque moment d'événement de lacet (T0) dans le sens horaire et dans le sens antihoraire, et pour calculer la moyenne des données ;
une unité de détermination configurée pour déterminer un premier paramètre de performance expérimentale (P1) au début de l'intervalle de temps et un deuxième paramètre de performance expérimentale (P2) à la fin de l'intervalle de temps à partir des données moyennées pour chaque événement de lacet dans le sens horaire et dans le sens antihoraire ;
une unité de calcul configurée pour calculer une différence de paramètre de performance expérimentale (P2 - P1) entre les premier et deuxième paramètres de performance expérimentale (P1, P2) pour chaque événement de lacet dans le sens horaire et dans le sens antihoraire ;
une unité de détermination configurée pour déterminer une première direction du vent (WD1) au début de l'intervalle de temps et une deuxième direction du vent (WD2) à la fin de l'intervalle de temps à partir des données moyennées pour chaque événement de lacet dans le sens horaire et dans le sens antihoraire ;

une unité de calcul configurée pour calculer un premier paramètre de performance théorique ($P_\gamma$+WD1) au début de l'intervalle de temps sur la base de la première direction du vent déterminée (WD1) et un deuxième paramètre de performance théorique ($P_\gamma$+WD2) à la fin de l'intervalle de temps sur la base de la deuxième direction du vent déterminée (WD2) pour chaque événement de lacet dans le sens horaire et dans le sens antihoraire ;

une unité de calcul configurée pour calculer une différence de paramètre de performance théorique ($P_\gamma$+WD1 - $P_\gamma$+WD2) entre les premier et deuxième paramètre de performance théorique ($P_\gamma$+WD1, $P_\gamma$+WD2) pour chaque événement de lacet dans le sens horaire et dans le sens antihoraire ;

une unité de calcul configurée pour calculer des erreurs absolues (Ecw, Eccw) entre la différence de paramètre de performance expérimentale (P2 - P1) et la différence de paramètre de performance théorique ($P_\gamma$+WD1 - $P_\gamma$+WD2) des événements de lacet dans le sens horaire et dans le sens antihoraire, respectivement ;

une unité d'addition configurée pour additionner les erreurs absolues (Ecw, Eccw) des événements de lacet dans le sens horaire et dans le sens antihoraire afin d'obtenir une erreur totale (Ecw + Eccw) ;

une unité de détermination configurée pour déterminer une erreur minimale (idx) de l'erreur totale (Ecw + Eccw) ; et

une unité de détermination configurée pour déterminer un désalignement en lacet sur la base de l'erreur minimale.

## FIG 1

FIG 2

FIG 3

# FIG 4

North

$W_{vector}$

$W_{angle}$

8

desired nacelle orientation

yaw offset

yaw error

yaw misalignment

nacelle position

3

6

FIG 5

### Wind Direction, Anemometer

### Nacelle Position

FIG 6

Filtered Yaw Error

Power

## FIG 7

**Wind Direction, Anemometer**

**Nacelle position**

# FIG 8

Filtered Yaw Error

Power

# FIG 9

**Wind Direction, Anemometer**

**Nacelle Position**

## FIG 10

Filtered Yaw Error

Power

## FIG 11

## FIG 12

## FIG 13

## FIG 14

## FIG 15

Power difference with a yaw misalignement
for different yaw loss exponents

Yaw loss Exponent = 1.4
Yaw loss Exponent = 1.7
Yaw loss Exponent = 2.2

Yaw Error [°]

## FIG 16

Power difference with a yaw misalignement
for different yaw loss exponents

Yaw loss Exponent = 1.4
Yaw loss Exponent = 1.7
Yaw loss Exponent = 2.2

Yaw Error [°]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3225837 A1

- WO 2018059641 A1

**Non-patent literature cited in the description**

- **JAIME LIEW** ; **ALBERT M. URBÁN** ; **SØREN JUHL ANDERSEN**. Analytical model for the power-yaw sensitivity of wind turbines operating in full wake. *Wind Energy Science*, 31 March 2020